Europäisches Patentamt

European Patent Office

Office européen des brevets

(19)

(11) Veröffentlichungsnummer: **0 228 340 B1**

# (12) EUROPÄISCHE PATENTSCHRIFT

(45) Veröffentlichungstag der Patentschrift: **21.08.91**

(51) Int. Cl.⁵: **H02K 7/12**

(21) Anmeldenummer: **86730195.4**

(22) Anmeldetag: **26.11.86**

(54) **Verschiebeläufermotor.**

(30) Priorität: **24.12.85 DE 3546100**
**04.08.86 DE 3626270**
**18.08.86 DE 3627992**
**03.11.86 DE 3637591**

(43) Veröffentlichungstag der Anmeldung:
**08.07.87 Patentblatt 87/28**

(45) Bekanntmachung des Hinweises auf die
Patenterteilung:
**21.08.91 Patentblatt 91/34**

(84) Benannte Vertragsstaaten:
**AT BE CH DE ES FR GB GR IT LI LU NL SE**

(56) Entgegenhaltungen:
**DE-B- 1 240 981**
**FR-A- 1 424 261**
**FR-A- 2 173 205**
**FR-A- 2 357 094**
**GB-A- 1 148 465**

(73) Patentinhaber: **MANNESMANN Aktiengesellschaft**
**Mannesmannufer 2**
**W-4000 Düsseldorf 1(DE)**

(72) Erfinder: **Flaig, Heinz, Dipl.-Ing.**
**Gräfin-Imma-Strasse 60**
**W-4630 Bochum(DE)**
Erfinder: **Neumann, Udo, Dipl.-Ing.**
**Gildenstrasse 8**
**W-4600 Dortmund(DE)**
Erfinder: **Horbach, Rainer, Dipl.-Ing.**
**Auf der Bleiche 20**
**W-5810 Witten(DE)**
Erfinder: **Bitsch, Harald, Dipl.-Ing.**
**Karl-Ligien-Strasse 46**
**W-5810 Witten(DE)**
Erfinder: **Hasselmann, Heinz, Dr.- Ing.**
**Max-Planck-Strasse 62**
**W-5800 Hagen(DE)**
Erfinder: **Zacharias, Karl, Dipl.-Ing.**
**Am Wiesenberge 21**
**W-5840 Schwerte 1(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

## Beschreibung

Die Erfindung betrifft einen Bremsmotor mit einer Ständerwicklung und einem relativ gegen die Kraft einer Feder dazu axial verschiebbaren, konisch ausgebildeten Rotor gemäß dem Oberbegriff des Patentanspruchs 1.

Ein derartiger Bremsmotor ist aus der DE-OS 30 08 615 bekannt. Zum Übertragen des Drehmomentes dient eine Nut/Federverbindung zwischen Rotor und Welle. Durch diese Art der Verbindung treten relativ hohe Reibungsverluste auf, und zwar besonders beim Motoranlauf, da hier die Verschiebung gegen das hohe Anlaufmoment erfolgen muß. Hieraus resultiert eine unerwünschte Schwächung der Bremsfeder und des Bremsmomentes.

Aus der FR-A-1 424 261 ist ein sogenannter Verschiebeläufermotor bekannt, bei dem das das Drehmoment übertragende Verformungselement in Form einer Feder vorgesehen ist. Auch die FR-A-2 173 205 offenbart einen Verschiebeläufermotor, in dem der Verschiebeläufer mindestens an einem Ende über ein auf der Welle befestigte, das Drehmoment übertragendes Verformungselement axial verschiebbar auf der Welle abgestützt ist.

Aus der DE-PS 22 09 347 ist ein sogen. Schiebeankermotor bekannt, bei dem der Anker auf der axial verschiebbar gelagerten Welle angeordnet ist. Der Läufer selbst ist axial unverschiebbar angeordnet, und zur Übertragung des Drehmomentes vom Läufer auf die Welle dient eine strahlenartig ausgebildete Blattfederanordnung. Dieser Motor übernimmt keine Bremsfunktion im Sinne des gattungsgemäßen Standes der Technik, weil hier die Verschiebung der Welle lediglich eine Schaltfunktion übernimmt. Wesentlich ist dabei auch, daß der Rotor (Anker) nicht konisch ausgebildet ist.

Die Kräfte, die bei einer solchen Schaltfunktion auftreten, sind überhaupt nicht mit denen vergleichbar, die beim Lösen oder Ansprechen der Bremse in einem Bremsmotor der eingangs genannten Art zu berücksichtigen sind. Daher würde eine strahlenartig ausgebildete Blattfederanordnung bei der Übertragung hohe Drehmomente gegen relativ hohe - durch die Bremsfunktion verursachte - Reibkräfte schnell beschädigt werden, d.h. es würde ein Ausknicken der Strahlen der Blattfeder auftreten. Diese Gefahr wird noch dadurch vergrößert, daß bei einem Bremsmotor zwangsläufig ein gewisser Verschleiß der Bremsbeläge auftritt, und damit ändert sich im Laufe der Zeit die axiale Verschiebung des Rotors (bis zur Anlage der Bremsbeläge) ständig, d.h. sie wird größer. Bei einem lediglich eine Schaltfunktion ausübenden Schiebeankermotor bleibt der Verschiebeweg dagegen konstant, so daß die auf die Federanordnung einwirkenden Kräfte gleich bleiben und damit auch mit einer derartigen Konstruktion beherrschbar sind.

Der Erfindung liegt daher die Aufgabe zugrunde, den eingangs genannten Bremsmotor so auszugestalten, daß die axiale Verschiebung des Rotors mit geringstem Reibungswiderstand möglich ist, gleichzeitig aber hohe Drehmomente übertragen werden können.

Gelöst wird diese Aufgabe erfindungsgemäß mit den Merkmalen im Kennzeichen des Anspruchs 1. Vorzugsweise Ausgestaltungen ergeben sich aus den Unteransprüchen.

Die erfindungsgemäß die relative Verschiebung des Rotors gegenüber der axial unverschiebbar gelagerten Welle ermöglichende Membran weist eine große axiale Elastizität auf, und zwar durch die strahlenartig angeordneten Membranarme, gleichzeitig aber können auch bei großer axialer Auslenkung hohe Drehmomente übertragen werden, weil die konstruktive Ausgestaltung mit den die strahlenartigen Arme verbindenden Außen- und Innenringen das Auftreten von - die Membran zerstörenden - Knickkräften verhindert. Wesentlich ist, daß diese Eigenschaften auch beibehalten bleiben können, wenn im Laufe der Betriebszeit ein Verschleiß der Bremsbeläge auftritt, und damit die axiale Verschiebung zwischen Bremsstellung und Laufstellung des Rotors größer wird.

Ein Ausführungsbeispiel der Erfindung ist in den Zeichnungen dargestellt und im folgenden erläutert. Es zeigt

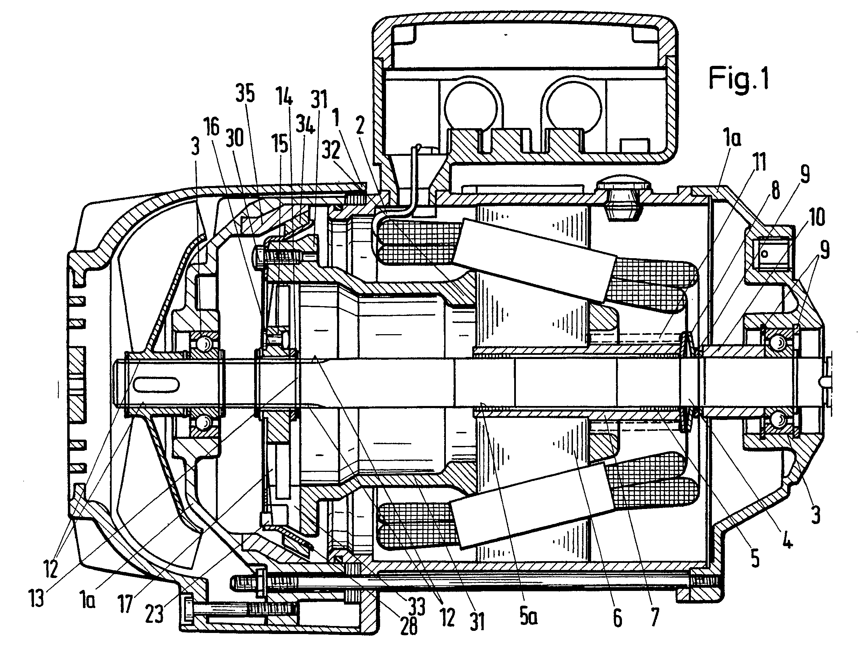

Fig. 1 einen Längsschnitt durch einen Bremsmotor und

Fig. 2 eine Stern-Scheiben-Membrane.

Im Motorgehäuse 1 ist eine Ständerwicklung 2 angeordnet, und die Stirnseiten 1a haben Lager 3 für eine Welle 4, die mit Sprengringen 9 und einem Distanzrohr 10 gegen gegen axiale Verschiebung im Gehäuse 1 gesichert ist. Auf der Welle 4 ist ein Rotor 6 mit seiner Hülse 7 auf Lagerbuchsen 5 und 5a geführt und bis gegen einen Aufpralldämpfer 8 verschiebbar, der sich an einem der Sprengringe 9 auf der Welle 4 abstützt. Der aus zwei Tellerfedern gebildete Aufpralldämpfer 8 bildet auch das Widerlager für eine auf den Rotor 6 wirkende Bremsfeder 11, die den Rotor 6 über einen Kurzschlußring 32 und dessen Verlängerung 31 sowie über den damit verbundenen Bremsring 28 mit seinem Bremsbelag 34 beim Abschalten des Motors gegen eine Bremsfläche 35 der Stirnseite 1 a des Motorgehäuses 1 drückt.

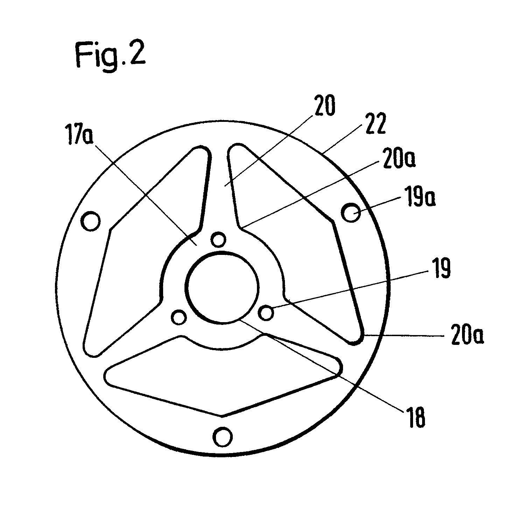

Die in der Fig. 2 gezeichnete Membrane 17 hat am Übergang zu den Membranarmen 20 zum Vermeiden von Kerbwirkungen Übergangsrundungen 20a, die auch am Übergang zum Befestigungsring 22 vorhanden sind. Dieser hat zwischen den Membranarmen 20 Bohrungen 19a, die mit Bohrungen 29 im Bremsring 28 für die Schrauben 30 übereinstimmen, mit denen der Bremsring und die Membrane an der Verlängerung 31 des Kurzschlußringes 32 befestigt sind. Der Innenring 17a der Membrane hat ebenfalls Bohrungen 19 für die Mieten 16 sowie eine Zentralbohrung 18..

**Patentansprüche**

1. Bremsmotor mit einer Ständerwicklung (2) und einem relativ gegen die Kraft einer Feder dazu axial verschiebbaren, konisch ausgebildeten Rotor (6), der mit einer Welle (4) verdrehfest und in Wellenlängsrichtung verschieblich verbunden und im Ruhezustand aus dem Ständer gegen eine Bremsfläche (34) drückbar ist und bei dem die Welle (4) in Stirnplatten (Ta) eines Motorgehäuses axial unverschiebbar gelagert ist,
**dadurch gekennzeichnet,**
daß der Rotor (6) über eine am freien Ende des Kurzschlußringes (32) befestigte Membrane (17) mit der Welle verbunden ist, wobei die Membrane (17) einen mit der Welle (4) verbundenen Innenring (17a), und einen mit dem Kurzschlußring (32) verbundenen Außenring (22) sowie beide Ringe (17a, 22) verbindende sternförmig angeordnete Arme (20) aufweist.

2. Bremsmotor nach Anspruch 1,
**dadurch gekennzeichnet,**
daß die Welle (4) auf dem anderen Ende mit einer das Drehmoment nicht übertragenden in Axialrichtung bewegbaren Gleitführung (Lagerbuchse 5) für den Rotor (6) versehen ist.

3. Bremsmotor nach Anspruch 1,
**dadurch gekennzeichnet,**
daß der Rotor (6) auf beiden Enden über Membranen (17) auf der Welle (4) abgestützt ist.

4. Bremsmotor nach Anspruch 2,
**dadurch gekennzeichnet,**
daß der Rotor (6) auf beiden Enden über Gleitführungen (5, 5a) auf der Welle (4) gelagert ist.

5. Bremsmotor nach einem oder mehreren der vorgenannten Ansprüche,
**dadurch gekennzeichnet,**
daß die Membrane (17) an einem Tragring (15) befestigt ist, der über eine Verzahnung (12) unverdrehbar auf der Welle (4) angeordnet und gegen axiale Verschiebung gesichert ist z.B. durch in Ringnuten (13) eingreifende Sprengringe (14) oder Festsitz.

6. Bremsmotor nach Anspruch 5,
**dadurch gekennzeichnet,**
daß die Membrane (17) mit einer Zentralbohrung (18) und über durch Bohrungen (19) geführte Nieten (16) auf dem Tragring (15) befestigt ist.

7. Bremsmotor nach Anspruch 1,
**dadurch gekennzeichnet,**
daß die Membrane (17) mindestens drei Membranarme (20) hat.

8. Bremsmotor nach einem oder mehreren der Ansprüche 1 bis 7,
**dadurch gekennzeichnet,**
daß der Befestigungsring (22) Bohrungen (19a) hat, mit denen er über Schrauben (30) mit dem Kurzschlußring (32) verbunden ist.

9. Bremsmotor nach einem oder mehreren der vorgenannten Ansprüche,
**dadurch gekennzeichnet,**
daß die Membranarme (20) an ihren Enden mit Übergangsrundungen (20a) an den Innenring (17a) bzw. den Befestigungsring (22) anschließen.

10. Bremsmotor nach einem oder mehreren der vorgenannten Ansprüche,
**dadurch gekennzeichnet,**
daß der Kurzschlußring (32) eine Verlängerung (31) für die Befestigung des äußeren Teiles der Membrane (17) hat.

**Claims**

1. Self-braking motor with a stator winding (2) and a conical rotor (6), which can be axially displaced against the force of a spring relative to the latter, is connected to a shaft (4) such that it cannot rotate and can be displaced in the longitudinal direction of the shaft, can be pushed when in the state of rest out of the stator against a braking surface (34) and the shaft (4) of which is axially fixed in front plates (1a) of a motor casing, characterised in that the rotor (6) is connected to the shaft via a diaphragm (17), which is secured to the free end of the end ring (32), the diaphragm (17) comprising an inner ring (17a), which is connected to the shaft (4), an outer ring (22), which is connected to the end ring (32), and radially arranged arms (20), which connect the two rings (17a, 22).

2. Self-braking motor according to claim 1, characterised in that the shaft (4) is provided at the other end with an axially mobile slideway (bearing bush 5), which does not transmit the torque, for the rotor (6).

3. Self-braking motor according to claim 1, characterised in that the rotor (6) is supported on the shaft (4) at both ends via diaphragms (17).

4. Self-braking motor according to claim 1, characterised in that the rotor (6) is mounted on the shaft (4) at both ends via slideways (5, 5a).

5. Self-braking motor according to one or more of the preceding claims, characterised in that the diaphragm (17) is secured to a support ring (15), which is non-rotatably arranged on the shaft (4) via a tooth system (12) and is secured against axial displacement, e.g. by retaining rings (14), which engage in annular grooves (13), or an interference fit.

6. Self-braking motor according to claim 5, characterised in that the diaphragm (17) is secured to the support ring (15) by means of a central borehole (18) and rivets (16), which are passed through boreholes (19).

7. Self-braking motor according to claim 1, characterised in that the diaphragm (17) comprises at least three diaphragm arms (20).

8. Self-braking motor according to one or more of claims 1 to 7, characterized in that the securing ring (22) comprises boreholes (19a), by means of which it is connected to the end ring (32) via screws (30).

9. Self-braking motor according to one or more of the preceding claims, characterized in that the diaphragm arms (20) adjoin the inner ring (17a) and the securing ring (22) at their ends by way of transition curvatures (20a).

10. Self-braking motor according to one or more of the preceding claims, characterized in that the end ring (32) comprises an extension (31) for securing the outer part of the diaphragm (17).

**Revendications**

1. Moteur frein comportant un enroulement de stator (2) et un rotor conique (6), déplaçable axialement relativement à celui-ci contre la force d'un ressort, qui est solidaire en rotation d'un arbre (4) et lui est relié de façon déplaçable dans la direction longitudinale de l'arbre, et peut être pressé, au repos, hors du stator contre une surface de freinage (34), et dans lequel l'arbre (4) est monté de façon axialement non déplaçable dans des plaques frontales (1a) d'un carter de moteur, caractérisé en ce que le rotor (6) est relié à l'arbre par l'intermédiaire d'une membrane (17) fixée à l'extrémité libre de la bague de court-circuit (32), la membrane (17) comportant une bague interne (17a) reliée à l'arbre (4), et une bague externe (22) reliée à la bague de court-circuit (32), ainsi que des bras (20) agencés en forme d'étoile reliant les deux bagues (17a,22).

2. Moteur frein selon la revendication 1, caractérisé en ce que l'arbre (4), à l'autre extrémité, est muni d'un guidage à glissement (coussinet 5) pour le rotor (6), mobile en direction axiale, et ne transmettant pas le couple.

3. Moteur frein selon la revendication 1, caractérisé en ce que le rotor (6) s'appuie, aux deux extrémités, par l'intermédiaire de membranes (17) sur l'arbre (4).

4. Moteur frein selon la revendication 2, caractérisé en ce que le rotor (6), aux deux extrémités, est monté sur l'arbre (4) par l'intermédiaire de guidages à glissement (5,5a).

5. Moteur frein selon une ou plusieurs des revendications précédentes, caractérisé en ce que la membrane (17) est fixée a une bague de support (15), qui est agencée sur l'arbre (4), de façon non rotative, par l'intermédiaire d'une denture (12) et est fixée contre un déplacement axial, par exemple par des joncs (14) s'engageant dans des rainures annulaires (13), ou par ajustement serré.

6. Moteur frein selon la revendication 5, caractérisé en ce que la membrane (17) est fixée sur la bague de support (15) par un perçage central (18) et par l'intermédiaire de rivets (16) guidés à travers des perçages (19).

7. Moteur frein selon la revendication 1, caractérisé en ce que la membrane (17) comporte au moins trois bras (20).

8. Moteur frein selon une ou plusieurs des revendications 1 a 7, caractérisé en ce que la bague de fixation (22) présente des perçages (19a), grâce auxquels elle est reliée à la bague de court-circuit (32) par des vis (30).

9. Moteur frein selon une ou plusieurs des revendications précédentes, caractérisé en ce que les bras (20) de la membrane, à leurs extrémités, se raccordent à la bague interne (17a) ou à la bague de fixation (22) par des arrondis de transition (20a).

10. Moteur frein selon une ou plusieurs des revendications précédentes,
caractérisé en ce que la bague de court-circuit (32) présente un prolongement (31) pour la fixation de la partie externe de la membrane (17).

Fig.1

## Fig.2